# EUROPÄISCHE PATENTSCHRIFT

(11) **EP 2 296 794 B1**
(45) Veröffentlichungstag und Bekanntmachung des Hinweises auf die Patenterteilung: **02.09.2015**
(21) Anmeldenummer: 09768914.5
(22) Anmeldetag: 12.06.2009
(51) Int. Cl.: B01D 67/00, B01D 53/22, B01D 71/52, B01D 71/56, B01D 71/80

(54) **POLYMERMEMBRAN**
POLYMER MEMBRANE
MEMBRANE POLYMÈRE

(30) Priorität: 25.06.2008 DE 102008029830
(43) Veröffentlichungstag der Anmeldung: 23.03.2011
(73) Patentinhaber: Helmholtz-Zentrum Geesthacht Zentrum für Material- und Küstenforschung GmbH, 21502 Geesthacht (DE)
(72) Erfinder: PEINEMANN, Klaus-Viktor, 21502 Geesthacht (DE); JOHANNSEN, Grete, 21522 Hohnstorf (DE); YAVE RIOS, Wilfredo, 21502 Geesthacht (DE); CAR, Anja, 2352 Selnica OB Dravi (SI)
(74) Vertreter: Grebner, Christian Georg Rudolf
(86) Internationale Anmeldenummer: PCT/EP2009/004224
(87) Internationale Veröffentlichungsnummer: WO 2009/156065

(56) Entgegenhaltungen:
- EP-A- 0 761 291
- US-A- 4 900 449
- US-A- 5 163 977
- US-A- 5 936 004
- CAR ET AL: "PEG modified poly(amide-b-ethylene oxide) membranes for CO2 separation", JOURNAL OF MEMBRANE SCIENCE, ELSEVIER, vol. 307, no. 1, 18 December 2007 (2007-12-18), pages 88-95, XP022392367, ISSN: 0376-7388

## Beschreibung

Die Erfindung betrifft ein Verfahren zum Herstellen einer Membran, insbesondere Gastrennmembran, wobei die Membran eine selektive Trennschicht aufweist, und eine Membran, insbesondere Gastrennmembran, die eine selektive Trennschicht aufweist.

In US-A-5 936 004 ist ein ionentauschender Formkörper offenbart, wobei daraus hergestellte Folien als lonentauschermembranen hergestellt werden. Der ionentauschende Formkörper wird hierbei aus einer Lösung von Polymeren, die reaktive halogenhaltige funktionelle Gruppen enthalten, und tertiären Aminen durch Abdampfen des Lösemittels oder durch Phaseninversion hergestellt, wobei das Polymer im Lösungsgemisch löslicher halogenierter Polyether ist.

Überdies offenbart US-A-4 900 449 eine mikroporöse Membran. Zur Herstellung der Membran wird ein Polymer in einer polaren aprotischen Lösung gelöst unter Verwendung eines Polymers, wobei das zugesetzte Polymer Polyethylenglykol ist.

In US-A-5 163 977 sind ferner eine semipermeable Gasmembran sowie ein Verfahren zur Herstellung der semipermeablen Gasmembran offenbart. Hierbei wird eine Mischung hergestellt, die ein hydrophobes polymeres Material, ein Lösungsmittel für dieses polymere Material sowie wenigstens ein nicht ionisches grenzflächenaktives Mittel und ein wenigstens Nichtlösungsmittel für dieses polymere Material umfasst.

Das hydrophobe polymere Material umfasst wenigstens ein Polymer, das ausgewählt ist aus Polycarbonaten, Polyestern, Polyestercarbonaten, Polyphenyloxiden, Polysulfonen, Polyolefinen, Polyphenylsulfiiden, Polyethern, fluorierten Polyimiden, Polystyrolen, Polyetherketonen, Polyetheretherketonen, Polyetherimiden, und Polyamidimiden.

Außerdem offenbart EP-A-0 761 291 eine Polymerspinnlösung zur Herstellung einer ultradünnen integralasymmetrischen Membran, wobei die Membran unter Verwendung von wässrigem Polyethylenglykol hergestellt wird.

Technisch eingesetzte Polymermembranen für die Gastrennung sind in der Regel Kompositmembranen, die aus einer porösen Unterstruktur und einem porenfreien, dichten Polymerfilm bestehen. Hierfür wird eine Kompositmembran verwendet bzw. die Kompositmembran umfasst ein entsprechendes Kompositmaterial. Für die technische Verwertbarkeit ist es wichtig, hohe Gasflüsse pro Fläche zu erreichen, um die Membranflächen und die Energiekosten gering zu halten. Die mögliche Selektivität und der Gasfluss sind von den Polymereigenschaften vorgegeben. Proportional zur steigenden Schichtdicke fällt der Fluss und die Selektivität bleibt im Wesentlichen gleich. Es kommt somit darauf an, geeignete Materialien bereitzustellen und diese zu möglichst kleinen Schichtdicken zu Kompositmembranen oder integral-asymmetrischen Membranen zu verarbeiten.

Die zur Auswahl stehenden polymeren Materialien für die Herstellung einer trennselektiven Schicht der Kompositmembranen können in Elastomere und glasartige Polymere unterteilt werden, die sich durch die Lage der Glasübergangstemperatur oberhalb bzw. unterhalb der Raumtemperatur unterscheiden. Beide Polymertypen eignen sich für die Gastrennung. Optimierte, technisch eingesetzte Membranen werden in der Regel bei Schichtdicken der trennaktiven Schicht von 0,5 bis 1 µm eingesetzt.

Darüber hinaus ist in zahlreichen industriellen Prozessen die Trennung polarer Gase von unpolaren Gasen bzw. Gasgemischen, wie z.B. die Trennung saurer Gase wie Kohlendioxid (CO₂) oder Schwefelwasserstoff (H₂S) besonders wichtig. Beispielsweise ist in der petrochemischen Industrie die Abtrennung von CO₂ aus Erdgasen von Bedeutung, da CO₂ in viele Erdgasquellen in hoher Konzentration vorliegt. Insbesondere ist Kohlendioxid in Kombination mit Wasser korrosiv und kann daher Pipelines oder andere Funktionseinheiten zerstören. Weiterhin reduziert Kohlendioxid den Heizwert von Erdgas.

Für die Abtrennung von Kohlendioxid aus Erdgas werden Membrananlagen eingesetzt, um selektiv Kohlendioxid aus den Gasströmen bzw. Gasgemischen zu entfernen. Beispielsweise wird in Quadripur, Pakistan, eine Membrananlage betrieben, wobei mit der Anlage etwa 14 Mio. m³ Erdgas pro Talg gereinigt werden. Hierbei werden als Membranen asymmetrische Celluloseacetat-Membranen eingesetzt. Der Kohlendioxidfluss durch eine Celluloseacetat-Membran beträgt etwa 0,2 m³/(m² h bar). Die Selektivität gegenüber Methan beträgt zwischen 15 bis 20, die Selektivität der Celluloseacetat -Membran gegenüber Stickstoff ist leicht höher.

Für viele Anwendungen, bei denen kein hoher Druck zur Verfügung steht, ist der Gasfluss durch eine Zelluloseacetat-Membran zu klein, so dass die erforderlichen Membranflächen sehr groß sind.

Eine zweite wichtige Polymerklasse für Membranen zur Kohlendioxid-Abtrennung sind Polyimide. Ein Beispiel hierfür ist das kommerziell erhältliche Matrimid. Bekannte Polyimid-Membranen werden beispielsweise von UBE in Japan und Air Products in den USA hergestellt bzw. vertrieben. Die Selektivität von Polyimid-Membranen ist dabei höher als die Selektivität von Zelluloseacetat-Membranen (ungefähr 35 bis 50 für Kohlendioxid / Stickstoff), wobei der Fluss für die Polyimid-Membranen ähnlich ist.

In Tabelle 1 sind Mer-nbranmafierialien aufgeführt, die sich für Kohlendioxid-Abtrennungen aus Gasgemischen gut eignen.

**Tabelle 1 Membranmaterialien für Kohlendioxid-Abtrennung**

| Polymer | Permeabilität von CO₂ / [Barrer] | Selektivität α | | |
|---|---|---|---|---|
| | | CO₂/N₂ | CO₂/CH₄ | CO₂/H₂ |
| PDMS | 3070 | 9.6 | 3.8 | 4.3 |
| Pebax^{®} 2533 | 221 | 23 | | 3.7 |
| Pebax^{®} 4011 (jetzt Pebax^{®} 1657) | 78 | 60 | 15 | 7.8 |
| Matrimid | 10.7 | 33 | 42 | 0.38 |
| Celluloseacetat | 6.3 | 30 | 30 | 2.4 |

| | | | | |
|---|---|---|---|---|
| Permeabilität in Barrer (1 Barrer = 10⁻¹⁰ cm³(STP) cm / (cm² s cmHg); (PDMS = Polydimethylsiloxan) | | | | |

Bei dem in Tabelle 1 unter der Bezeichnung Pebax^{®} (von ARKEMA) aufgeführten Polymer handelt es sich um ein kommerziell erhältliches Multiblock-Copolymer, welches Blöcke aus Polyethylenoxid und Nylon (Polyamid) enthält. Pebax^{®} MH 1657 besteht aus 60 Gew.% PEO (Polyethylenoxid) und 40 Gew.% Nylon (PA 6).

Aus Tabelle 1 geht hervor, dass für Kohlendioxid eine Membran aus Pebax^{®} eine deutlich höhere Permeabilität als eine Membran aus Celluloseacetat oder Polyimid bzw. Matrimid hat.

Weiterhin ist in US 4,963,165 die Herstellung einer Kompositmembran aus Pebax^{®} beschrieben, wobei die darin beschriebene Kompositmembran einen dreifach höheren Fluss als die vorgenannten Membranen aufweist.

Darüber hinaus wurde in einem wissenschaftlichen Beitrag "PEG modified poly(amide-b-ethylene oxide) membranes for CO2 separation" (Journal of Membrane Science 307 (2008), 88-95) gezeigt, dass die Permeabilität von Kohlendioxid deutlich erhöht werden kann, wenn einem Membranpolymer aus Pebax^{®} Polyethylenglykol (PEG) zugemischt wird.

In Tabelle 2 sind die Eigenschaften von Pebax^{®} sowie Pebax^{®}/PEG-Mischungen dargestellt.

**Tabelle 2 CO₂-Permeabilit und Selektivität von Pebax^{®} MH1657 und Mischungen mit PEG (Polyethylenglykol), gemessen bei 30°C (Vergleichsdaten aus Journal of Membrane Science 307 (2008), 88-95)**

| Probe | ^{a}P CO₂ | ^{b}D CO₂ | ^{c}S CO₂ | α CO₂/H₂ | α CO₂/N₂ | α CO₂/CH₄ |
|---|---|---|---|---|---|---|
| Pebax^{®} | 24.8 (73) | 4.6 | 5.3 | 9.1 | 45 | 15.6 |
| Pebax^{®}/PEG10 | 25.6 (75) | 4.9 | 5.2 | 9.2 | 47 | 15.8 |
| Pebax^{®}/PEG20 | 27.2 (80) | 5.1 | 5.4 | 9.2 | 45 | 15.9 |
| Pebax^{®}/PEG30 | 35.8(105) | 6.2 | 5.8 | 9.6 | 43 | 15.1 |
| Pebax^{®}/PEG40 | 44.9(132) | 8.0 | 5.6 | 10.0 | 44 | 15.1 |
| Pebax^{®}/PEG50 | 51.3(151) | 9.6 | 5.3 | 10.8 | 47 | 15.5 |

| | | | | | | |
|---|---|---|---|---|---|---|
| ^{a}Permeabilitätskoeffzient P in [10⁻¹⁵ mol m/(m² s Pa)], (Barrer) ^{b} Diffusionskoeffizient D in [10⁻¹¹ (m²/s)] ^{c} Löslichkeitskoeffizient S in [10⁻⁴ mol (STP)/(m³ Pa)] | | | | | | |

Die Zahlenangaben hinter PEG in Tabelle 2 geben jeweils den Gew.-.%-Anteil von PEG (Polyethylenglykol) an der entsprechenden Mischung an.

Ausgehend von diesem Stand der Technik besteht die Aufgabe der Erfindung darin, eine bessere Membran für die Abtrennung von, insbesondere polaren, Gasen aus Gasgemischen bereitzustelien, die gegenüber den bisher bekannten Polymermembranen eine höhere Permeabilität, vorzugsweise für Kohlendioxid, aufweist.

Gelöst wird diese Aufgabe durch ein Verfahren zum Herstellen einer Membran, insbesondere Gastrennmembran, wobei die Membran eine selektive Trennschicht aufweist, mit den folgenden Schritten:
a) eine Polymerlösung wird aus wenigstens Polyetheramid und wenigstens einem veretherten Polyethylenglykol hergestellt, wobei das veretherte Polyethylengkol mit einem Anteil von 5 Gew.% bis 60 Gew.%, vorzugsweise bis 50 Gew.%, der Polymerlösung zugegeben wird und die veretherten Polyethylenglykole 2 bis 8 Ethylenglykoleinheiten aufweisen und die Ethergruppen aus linearen oder verzweigten Alkylgruppen mit 1 bis 6 Kohlenstoffatomen bestehen,
b) die Polymerlösung wird zu einem Film gegossen,
c) aus dem Film wird in einem weiteren Schritt die selektive Trennschicht, vorzugsweise durch Trocknung, hergestellt.

Unter der Verwendung von veretherten Polyethylenglykolen und Polyether-Polyamidblock-Copolymeren (als zweitem Polymer der Polymerlösung), die beispielsweise unter der Bezeichnung Pebax^{®} bekannt sind, werden stabile, homogene Mischungen bzw. Polymerlösungen bereitgestellt, aus denen eine Polymermembran bzw. eine selektive Trennschicht einer Membran, insbesondere Kompositmembran, hergestellt wird.

Dabei hat sich gezeigt, dass die Pebax^{®}/Polyethylenglykolether-Mischungen zu Polymermembranen hergestellt werden, die eine gesteigerte Permeabilität beispielsweise für Kohlendioxid gegenüber den bisher bekannten Polymermembranen auf der Basis von Pebax^{®} aufweisen. Hierbei werden die Polymerlösungen bzw. Polymermischungen (gemäß dem Stand der Technik) nicht mit Polyethylenglykol, sondern erfindungsgemäß mit den Ethern von Polyethylenglykolen hergestellt.

Insbesondere werden oligomere, veretherte Polyethylenglykole verwendet, die beispielsweise 2 bis 8 Ethylenglykoleinheiten aufweisen. Hierbei sind die endständigen OH-Gruppen verethert, wobei die Ethergruppe aus linearen oder verzweigten Alkylgruppen mit 1 bis 6 Kohlenstoffatomen bestehen kann.

Durch die Verwendung von veretherten Polyethylenglykolen in den Polymermembranen wird die Durchlässigkeit dieser Membran bzw. der selektiven Trennschicht für Kohlendioxid überdurchschnittlich bzw. signifikant erhöht. Die Selektivität gegenüber anderen Gasen bleibt dabei konstant oder erhöht sich, beispielsweise bei der Koh-Iendioxid/Wasserstoff-Trennung.

Erfindungsgemäß wird dabei eine, vorzugsweise geträgerte, Kompositmembran bzw. Polymermembran mit einer selektiven Trennschicht bereitgestellt, wobei auf einen, insbesondere porösen, Membranträger die selektive Trennschicht bestehend bzw. hergestellt aus der flüssigen Polymerlösung aus Ethern des Polyethylenglykols und Polyether-Polyamidblock-Copolymeren (z.B. Pebax^{®}) aufgetragen ist oder wird.

Als Polyetherblockamid ist unter Pebax^{®} ein Polyether-Polyamidblock-Copolymer bzw. Polyether-Block-Polyamid bekannt. Dieses Polymer besteht im Wesentlichen aus wiederkehrenden Einheiten der folgenden allegemeinen Formel: 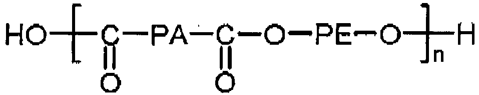 worin PA für ein Polyamidsegment, insbesondere eine lineare gesättigte alipatische Polyamidsequenz, und PE für ein Polyethersegment und n für eine positive ganze Zahl stehen. Typischerweise hat das reine Pebax^{®} MH 1657 eine Kohlendioxid-Permeabilität von 78 Barrer und eine Kohlendioxid/Wasserstoffselektivität von 9,1 bei 30°C.

Bei Verwendung von Polyethylenglykol-Dimethylether mit einem Anteil von 50 Gew.-% in einer Polymerlösung bzw. Polymermischung, aus der die Polymermembran bzw. die trennselektive Schicht hergestellt wird, hat sich gezeigt, dass sich die Kohlendioxid-Permeabilität auf 606 Barrer und die Selektivität gegenüber Wasserstoff auf 10,1 erhöht. Dadurch, dass der Fluss bei der erfindungsgemäßen Membran signifikant erhöht wird, verringert sich dementsprechend die für technische Trennprozesse erforderliche Membranfläche mindestens um den Faktor 3 und mehr. Bei einigen Trennprozessen verringert sich die Membranfläche um den Faktor 5 bis 10, insbesondere um den Faktor 7 bis 8.

Dabei ist in einer Ausgestaltung der Erfindung vorgesehen, dass die Herstellung der Polymerlösung in einem, insbesondere flüssigen, Lösungsmittel ausgeführt wird. Insbesondere wird die Polymerlösung in einem Ethanol-/Wassergemisch hergestellt, da in dieser binären Lösungsmittelmischung aus Ethanol und Wasser, beispielsweise in einem Mischungsverhältnis von 70 Gew.-% Ethanol, 30 Gew.-% Wasser, sowohl Pebax^{®} und verethertes Polyethylenglykol leicht gemischt werden. Ein weiterer Vorteil dieser Lösung ist die Stabilität der Polymerlösung bei Raumtemperatur, wodurch der Membranherstellungsprozess erleichtert wird.

Vorzugsweise wird nach der Herstellung des Gemisches aus der Polymerlösung und dem Lösungsmittel das Gemisch zu einem Film gegossen. Anschließend wird der Film auf per se bekannte Weise, z.B. durch einen Luftstrom, getrocknet, so dass eine erfindungsgemäße selektive Trennschicht einer Membran erhalten wird.

Für die Herstellung eine Kompositmembran wird der Film auf einen Membranträger bzw. eine Trägermembran gegossen und danach zu einer selektiven Trennschicht getrocknet. Alternativ wird die selektive Trennschicht auf oder in dem Membranträger oder der Trägermembran angeordnet.

Die Kompositmembran ist aufgebaut aus einer per se bekannten porösen Trägermembran oder einem Membranträger, auf die bzw. auf den eine selektive Trennschicht auf Basis eines vernetzten Polyvinylalkohols aufgebracht ist.

Die per se bekannte poröse Trägermembran kann aus Polyacrylnitril (PAN), Polyamidimid, Polyetherimid, Polyethersulfon und allen membranbildenden Polymere sowie deren Modifikationen besteht. Als Träger eignen sich auch anorganische Membranen bzw. anorganisch-organische Blendmembranen. Die erfindungsgemäßen Membranen können sowohl als Flachmembranen als auch als Hohlfasermembranen eingesetzt werden.

Die zum Einsatz gebrachten porösen Trägermembranen sollten eine enge Porenradienverteilung und einen solchen mittleren Porenradius besitzen, dass die Moleküle der Beschichtungslösung nicht in die Poren der porösen Trägermembran eindringen können.

Gemäß einer bevorzugten Ausführungsform ist es weiterhin von Vorteil, wenn die Polymerlösung, insbesondere im Verfahrensschritt a), bei einer Temperatur zwischen 50°C bis 90°C, insbesondere zwischen 70°C bis 80°C, hergestellt wird.

Außerdem wird als geeignetes verethertes Polyethylenglykol für die Herstellung der Polymerlösung (in Verfahrensschritt a)) Polyethylenglykol-Methylether und/oder Palyethylenglykol-Dimethylether und/oder Polyethylenglykol-Vinylether und/oder Polyethylenglykol-Divinylether und/oder Polyethylenglykol-Allylmethylether und/oder Polyethylen-Butylether und/oder Polyethylenglykol-Dibutylether oder Mischungen davon verwendet.

Dadurch, dass das veretherte Polyethylengkol mit einem Anteil von 5 Gew.% bis 60 Gew.%, vorzugsweise bis 50 Gew.%, der Polymerlösung, bezogen auf die Mischung mit dem zweiten Polymer, z.B. Pebax^{®}, zugegeben wird, werden stabile selektive Trennschichten erzielt.

Überdies wird in einer Ausgestaltung des Verfahrens der Film oder die selektive Trennschicht auf einen, vorzugsweise porösen, Träger bzw. Membranträger aufgebracht.

Darüber hinaus wird die Aufgabe gelöst durch eine Membran, insbesondere Gastrennmembran, die eine selektive Trennschicht aufweist, die vorzugsweise erhältlich oder hergestellt durch Ausführung der vorangehend beschriebenen Verfahrensschritte ist oder wird, wobei sich die Membran weiterhin dadurch auszeichnet, dass die selektive Trennschicht aus wenigstens einem Polyetherblockamid, und wenigstens einem veretherten Polyethylenglykol besteht oder hergestellt ist, wobei das veretherte Polyethylengkol mit einem Anteil von 5 Gew.% bis 60 Gew.%, vorzugsweise bis 50 Gew. %, der Membran beträgt und die veretherten Polyethylenglykole 2 bis 8 Ethylenglykoleinheiten aufweisen und die Ethergruppen aus linearen oder verzweigten Alkylgruppen mit 1 bis 6 Kohlenstoffatomen bestehen.

In einer Weiterbildung kann die trennselektive Schicht weiterhin auf eine, insbesondere semi-poröse oder poröse, Trägermembran aufgebracht werden.

Darüber hinaus ist es günstig, wenn das wenigstens eine veretherte Polyethylenglykol für die Herstellung der trennselektiven Schicht ein Polyethylenglykol-Methylether und/oder Polyethylenglykol-Dimethylether und/oder Polyethylenglykol-Vinylether und/oder Polyethylenglykol-Divinylether und/oder Pofyethylenglykol-Allylmethylether und/oder Polyethylenglykol-Butylether und/oder Polyethylenglykol-Dibutylether oder Mischungen davon ist.

Insbesondere beträgt bei der Membran der Anteil des veretherten Polyethylenglykols zur Herstellung der selektiven Trennschicht zwischen 5 Gew.% bis 60 Gew.%. vorzugsweise bis 50 Gew.%, beträgt.

Zudem ist es bevorzugt, wenn die selektive Trennschicht auf einen, vorzugsweise porösen, Träger angeordnet ist oder wird.

Weiterhin wird die Aufgabe gelöst durch die Verwendung von verethertem Polyethylenglykol zur Herstellung einer Membran, insbesondere Gastrennmembran, wobei die Membran eine selektive Trennschicht aufweist, die erfindungsgemäß hergestellt wird. Dazu wird auf die voranstehende Beschreibung ausdrücklich verwiesen.

Zweckmäßigerweise ist außerdem eine Verwendung einer erfindungsgemäßen Membran mit einer selektiven Trennschicht zur Trennung von, vorzugsweise polaren, Gasen, insbesondere Kohlendioxid, aus einem Gasgemisch. Hierbei wird die Membran beispielsweise bei der selektiven Abtrennung von Kohlendioxid aus Gasströmen wie z.B. Erdgas, Biogas, Rauchgas oder aus Gasmischungen, die für die Lagerung von Lebensmitteln und/oder Pflanzen verwendet werden, eingesetzt.

Außerdem ist ein Gastrennreaktor mit einer erfindungsgemäßen Membran, insbesondere einer Gastrennmembran, vorgesehen sowie ein Verfahren zum Betrieb eines Gastrennreaktors mit einer entsprechenden erfindungsgemäßen Membran, wobei zwischen einer ersten Seite und einer zweiten Seite der Membran eine Gasdruckdifferenz eingestellt wird.

Nachfolgend wird die Erfindung anhand von Ausführungsbeispielen exemplarisch beschrieben.

### Beispiel 1

Herstellung von Polymermembranen aus Polymermischungen von Pebax^{®} und Polyethylenglykoldimethylethern (PEG-DME)

Es wurden Polymermembranen aus mehreren Mischungen aus Pebax^{®} und Polyethylenglykoldimethylethern (PEG-DME), wobei die relativen Gewichtsanteile von beiden Polymeren variiert wurden.

Beispielsweise wurden für eine Polymermembran mit einer 50 Gew.% Pebax^{®} und 50 Gew. % Polyethylenglykoldimethylethern (PEG-DME) entsprechend 3 g Pebax^{®} MH 1657 (ARKEMA) unter Rückfluss bei 80°C in einer Mischung aus 30 g Wasser und 70 g Ethanol gelöst. Dem Pebax^{®}-Polymer wurden 3 g Polyethylenglykoldimethylether (MW 250) hinzugefügt. Anschließend wurde die Polymermischung zu einem Film ausgegossen und das Lösemittel, d.h. das Ethanol/Wassergemisch, verdampft, so dass eine selektive Trennschicht erhalten wurde.

Auf entsprechende Weise wurden weitere Polymermembranen mit Anteilen von 10 Gew. %, 20 Gew. %, 30 Gew. % und 40 Gew. % Polyethylenglykol-Dimethylether in der anfänglichen Polymermischung hergestellt.

In Tabelle 3 sind die Permeabilitätskoeffizienten, Diffusionskoeffizienten und Löslichkeitskoeffzienten sowie die Selektivität von Pebax^{®} und seinen Mischungen mit Polyethylenglykoldimethylether angegeben, wobei die Zahlenangaben nach DME die jeweiligen Anteile in Gew.-% von Polyethylen-Dimethylethern (PEG-DME) in den Polymermischungen angeben. Zum Vergleich wurde eine bekannte-Polymermembran aus (reinem) Pebax^{®} in der Tabelle ebenfalls aufgeführt.

**Tabelle 3 CO₂ und H₂ Permeabilitäten von Pebax^{®} und Mischungen mit PEG-Dimethylethern**

| Probe | ^{a}P CO₂ | ^{b}D CO₂ | ^{c}S CO₂ | α CO₂/H₂ | α CO₂/N₂ | α CO₂/CH₄ |
|---|---|---|---|---|---|---|
| Pebax^{®} | 78 | 0.49 | 1.6 | 9.1 | 45 | 15.6 |
| Pehax^{®}/ PEG-DME10 | 123 | 0.68 | 1.8 | 10.8 | 45 | 15.0 |
| Pebax^{®}/ PEG-DME20 | 206 | 1.16 | 1.8 | 11.8 | 45 | 14.7 |
| Pebax^{®}/ PEG-DME30 | 300 | 1.43 | 2.1 | 13.6 | 45 | 14.7 |
| Pebax^{®}/ PEG-DME40 | 440 | 1.80 | 2.4 | 14.2 | 42 | 13.8 |
| Pebax^{®}/ PEG-DME50 | 606 | 2.29 | 2.6 | 15.1 | 43 | 13.2 |

| | | | | | | |
|---|---|---|---|---|---|---|
| ^{a} Permeabilitätskoeffzient P in Barrer ^{b} Diffusionskoeffizient D in [10⁻⁶ (cm²/s)] ^{c} Löslichkeitskoeffizient S in [10⁻² cm³ (STP)/(cm³ s cmHg)] | | | | | | |

Aus Tabelle 3 ist zu entnehmen, dass die Permeabilität von Kohlendioxid mit ansteigendem Gehalt an Polyethylenglykol-Dimethylether in der selektiven Trennschicht ansteigt. Auch die Diffusionskoeffizienten sowie der Löslichkeitskoeffizient erhöhen sich mit anwachsendem Gehalt an Polyethylenglykol-Dimethylether. Dementsprechend erhöht sich auch die Selektivität von CO₂ gegenüber Wasserstoff von 9,1 bei einer Polymermembran (aus reinem Pebax^{®}) auf 15,1 bei einer Mischung aus Pebax^{®}/Polyethylenglykol-Dimethylether (PEGDME50) mit 50 % PEG-Dimethylether.

### Beispiel 2

Herstellung von Polymermembranen aus Polymermischungen von Pebax^{®} und verschiedenen, veretherten Polyethylenglykolen bzw. Polyethylenglykolethern

Es wurden Polymermembranen aus mehreren Mischungen aus Pebax^{®} und diversen, veretherten Polyethylenglykolen bzw. Polyethylenglykolethern, wobei die relativen Gewichtsanteile der beiden Polymere jeweils 50 Gew.% betragen.

Die Polymermembranen mit den selektiven Trennschichten wurden gemäß dem im Beispiel 1 beschriebenen Verfahren hergestellt.

Hierzu wurden Membranen hergestellt unter Verwendung von Pebax^{®} und Polyethylen sowie Polyethylenglykol-Methylether (PEG-ME), Polyethylenglykol-Dimethylether (PEG-DME), Polyethylenglykol-Vinylether (PEG-VE), Polyethylenglykol-Divinylether (PEG-DVE), Polyethylenglykol-Allylmethylether (PEG-AME), Polyethylenglykol-Butylether (PEG-BE) sowie Genosorb (eine Mischung von PEG-Dibutylethern mit unterschiedlichen Molekulargewichten), wobei der Anteil der Polyethylenglykolether jeweils 50 Gew.-% betrug.

In Tabelle 4 sind die Permeabilitätskoeffizienten, Diffusionskoeffizienten und Löslichkeitskoeffzienten sowie die Selektivität von Pebax^{®} und seinen Mischungen mit Polyethylenglykoldimethylether für Kohlendioxid (CO₂) und Wasserstoff (H₂) angegeben. Zum Vergleich wurden die entsprechenden Koeffizienten für die Polymermembranen aus Pebax^{®} sowie aus Pebax^{®} und Polyethylenglykol ebenfalls mit angegeben.

Aus Tabelle 4 geht hervor, dass bei den Polymermembranen auf der Basis von Pebax^{®} bzw. Polyether-Polyamid Block Copolymeren und veretherten Polyethylenglykolen die Permeabilität für Kohlendioxid gegenüber den bekannten Membranen aus Pebax^{®} sowie Pebax^{®}/PEG signifikant ansteigt. Dementsprechend sind auch die Diffusionskoeffizienten bei den erfindungsgemäßen Polymermembranen höher. Außerdem steigt die Selektivität von Kohlendioxid zu Wasserstoff bei den erfindungsgemäßen Polymermembranen im Vergleich zu den bekannten Membranen an.

**Tabelle 4 CO₂ und H₂ Permeabilitäten von Pebax^{®} und Mischungen mit verschiedenen PEG-Ethern**

| Probe | ^{a}P CO₂ | ^{b}D CO₂ | ^{c}S CO₂ | ^{b}D H₂ | ^{c}S H₂ | α CO₂/H₂ |
|---|---|---|---|---|---|---|
| Pebax^{®} | 78 | 0.49 | 1.6 | 3.2 | 0.027 | 9.1 |
| Pebax^{®}/PEG | 151 | 0.96 | 1.6 | 6.7 | 0.021 | 10.8 |
| Pebax^{®}/PEG-ME | 290 | 1.10 | 2.7 | 5.7 | 0.036 | 14.1 |
| Pebax^{®}/PEG-DME | 606 | 2.29 | 2.65 | 11.4 | 0.035 | 15.1 |
| Pebax^{®}/PEG-VE | 335 | 1.25 | 2.80 | 6.6 | 0.040 | 12.9 |
| Pebax^{®}/PEG-DVE | 570 | 2.87 | 1.98 | 13.9 | 0.032 | 12.9 |
| Pebax^{®}/PEG-AME | 620 | 2.32 | 2.68 | 12.0 | 0.037 | 14.5 |
| Pebax^{®}/PEG-DME | 650 | 2.33 | 2.81 | 9.5 | 0.046 | 14.9 |
| Pebax^{®}/PEG-BE | 225 | 1.60 | 1.40 | 9.0 | 0.022 | 11.4 |
| Pebax^{®}/Genosorb* | 520 | 2.97 | 1.75 | 9.6 | 0.042 | 13.0 |

| | | | | | | |
|---|---|---|---|---|---|---|
| ^{a} Permeabilitätskoeffzient P in Barrer; ^{b} Diffusionskoeffizient D in [10⁻⁶ (cm²/s)]; ^{c} Löslichkeitskoeffizient S in [10⁻² cm³ (STP)/(cm³ s cmHg)] ME = Methylether; DME = Dimethylether; VE=Vinylether; DVE=Divinylether; AME=Allylmethylether; BE=Butylether * Mischung von PEG-Dibutylethern mit unterschiedlichen Molekulargewichten | | | | | | |

## Patentansprüche

1. Verfahren zum Herstellen einer Membran, insbesondere Gastrennmembran, wobei die Membran eine selektive Trennschicht aufweist, mit den folgenden Schritten:
a) eine Polymerlösung wird aus wenigstens einem Polyetherblockamid und wenigstens einem veretherten Polyethylenglykol hergestellt, wobei das veretherte Polyethylenglykol mit einem Anteil von 5 Gew.% bis 60 Gew.%, vorzugsweise bis 50 Gew.%, bezogen auf die Mischung mit dem Polyetherblockamid, der Polymerlösung zugegeben wird und die veretherten Polyethylenglykole 2 bis 8 Ethylenglykoleinheiten aufweisen und die Ethergruppen aus linearen oder verzweigten Alkylgruppen mit 1 bis 6 Kohlenstoffatomen bestehen,
b) die Polymerlösung wird zu einem Film gegossen,
c) aus dem Film wird in einem weiteren Schritt die selektive Trennschicht, vorzugsweise durch Trocknung, hergestellt.

2. Verfahren nach Anspruch 1, **dadurch gekennzeichnet, dass** die Herstellung der Polymerlösung in einem Lösungsmittel ausgeführt wird.

3. Verfahren nach Anspruch 1 oder 2, **dadurch gekennzeichnet, dass** die Polymerlösung in einem Ethanol-/Wassergemisch hergestellt wird.

4. Verfahren nach einem der Ansprüche 1 bis 3, **dadurch gekennzeichnet, dass** die Polymerlösung bei einer Temperatur zwischen 50°C bis 90°C hergestellt wird.

5. Verfahren nach einem der Ansprüche 1 bis 4, **dadurch gekennzeichnet, dass** als verethertes Polyethylenglykol für die Herstellung der Polymerlösung Polyethylenglykol-Methylether und/oder "dimethylether und/oder -Vinylether und/oder -Divinylether und/oder -Allylmethylether und/oder -Butylether und/oder -Dibutylether oder Mischungen davon verwendet wird.

6. Verfahren nach einem der Ansprüche 1 bis 5, **dadurch gekennzeichnet, dass** der Film oder die selektive Trennschicht auf einen, vorzugsweise porösen, Träger aufgebracht wird.

7. Membran, insbesondere Gastrennmembran, die eine selektive Trennschicht aufweist, vorzugsweise erhältlich oder hergestellt durch Ausführung der Verfahrensschritte gemäß dem Verfahren nach einem der Ansprüche 1 bis 6, wobei die selektive Trennschicht aus wenigstens einem Polyetherblockamid und wenigstens einem veretherten Polyethylenglykol besteht oder hergestellt ist, wobei der Anteil des veretherten Polyethylenglykols zwischen 5 Gew.% bis 60 Gew.% vorzugsweise bis 50 Gew.%, der Membran beträgt und die veretherten Polyethylenglykole 2 bis 8 Ethylenglykoleinheiten aufweisen und die Ethergruppen aus linearen oder verzweigten Alkylgruppen mit 1 bis 6 Kohlenstoffatomen bestehen.

8. Membran nach Anspruch 7, **dadurch gekennzeichnet, dass** das wenigstens eine veretherte Polyethylenglykol ein Polyethylenglykol-Methylether und/oder Polyethylenglykol-Dimethylether und/oder Polyethylenglykol-Vinylether und/oder Polyethylenglykol-Divinylether und/oder Polyethylenglykol-Allylmethylether und/oder Polyethylenglykol-Butylether und/oder Polyethylenglykol-Dibutylether oder Mischungen ist.

9. Membran nach Anspruch 7 oder 8, **dadurch gekennzeichnet, dass** die selektive Trennschicht auf einem, vorzugsweise porösen, Träger angeordnet ist oder wird.

10. Verwendung von verethertem Polyethylenglykol zur Herstellung einer Membran, insbesondere Gastrennmembran, nach einem der Ansprüche 7 bis 9 .

11. Verwendung einer Membran nach einem der Ansprüche 7 bis 9 zur Trennung von, vorzugsweise polaren, Gasen, insbesondere Kohlendioxid, aus einem Gasgemisch.

12. Gastrennreaktor mit einer Membran, insbesondere einer Gastrennmembran, nach einem der Ansprüche 7 bis 9.

13. Verfahren zum Betrieb eines Gastrennreaktors nach Anspruch 12, wobei zwischen einer ersten Seite und einer zweiten Seite der Membran nach einem der Ansprüche 7 bis 9 eine Gasdruckdifferenz eingestellt wird.

## Claims

1. A method for producing a membrane, in particular a gas separating membrane, wherein the membrane has a selective separating layer, comprising the following steps:
a) a polymer solution is produced from at least one polyether block amide and at least one etherified polyethylene glycol, wherein the etherified polyethylene glycol is added to the polymer solution in an amount of 5% by weight to 60% by weight, preferably 50% by weight, with reference to the mixture with the polyether block amide, and the etherified polyethylene glycols have 2 to 8 ethylene glycol units, and the ether groups consist of linear or branched alkyl groups with 1 to 6 carbon atoms,
b) the polymer solution is poured into a film,
c) in an additional step, the selective separating layer is produced from the film, preferably by drying.

2. The method according to claim 1, **characterized in that** the polymer solution is produced in a solvent.

3. The method according to claim 1 or 2, **characterized in that** the polymer solution is produced in an ethanol/water mixture.

4. The method according to one of claims 1 to 3, **characterized in that** the polymer solution is produced at a temperature between 50°C to 90°C.

5. The method according to one of claims 1 to 4, **characterized in that** polyethylene glycol methyl ether and/or dimethyl ether, and/or vinyl ether, and/or divinyl ether, and/or allylmethyl ether, and/or butyl ether, and/or dibutyl ether or mixtures thereof are used as the etherified polyethylene glycol for producing the polymer solution.

6. The method according to one of claims 1 to 5, **characterized in that** the film or the selective separating layer is applied to a, preferably porous, substrate.

7. A membrane, in particular a gas separating membrane, which has a selective separating layer, preferably obtainable or produced by following the method steps of the method according to one of claims 1 to 6, wherein the selective separating layer consists of or is produced from at least one polyether block amide and at least one etherified polyethylene glycol, wherein the amount of etherified polyethylene glycol is between 5% by weight to 60% by weight, preferably up to 50% by weight, of the membrane, and the etherified polyethylene glycols have 2 to 8 ethylene glycol units, and the ether groups consist of linear or branched alkyl groups with 1 to 6 carbon atoms.

8. The membrane according to claim 7, **characterized in that** the at least one etherified polyethylene glycol is a polyethylene glycol methyl ether, and/or polyethylene glycol dimethyl ether, and/or polyethylene glycol vinyl ether, and/or polyethylene glycol divinyl ether, and/or polyethylene glycol allylmethyl ether, and/or polyethylene glycol butyl ether, and/or polyethylene glycol dibutyl ether, or mixtures thereof.

9. The membrane according to claim 7 or 8, **characterized in that** the selective separating layer is arranged or will be arranged on a, preferably porous, substrate.

10. A use of etherified polyethylene glycol for producing a membrane, in particular a gas separating membrane, according to one of claims 7 to 9.

11. The use of a membrane according to one of claims 7 to 9 to separate, preferably polar, gases, in particular carbon dioxide, from a gas mixture.

12. A gas separating reactor with a membrane, in particular a gas separating membrane, according to one of claims 7 to 9.

13. A method for operating a gas separating reactor according to claim 12, wherein a gas pressure differential is set between a first side and a second side of the membrane according to one of claims 7 to 9.

## Revendications

1. Procédé de fabrication d'une membrane, en particulier d'une membrane de séparation de gaz, la membrane ayant une couche de séparation sélective, comprenant les étapes suivantes :
a) une solution de polymères est fabriquée à partir d'au moins un polyéther bloc amide et d'au moins un polyéthylène glycol éthérifié, le polyéthylène glycol éthérifié étant ajouté à la solution de polymères dans une proportion allant de 5% à 60% en poids, de préférence jusqu'à 50% en poids, du mélange avec le polyéther bloc amide, et les polyéthylènes glycol éthérifiés comportent de 2 à 8 unités d'éthylène-glycol et les groupes éther sont constitués de groupes alkyle linéaires ou ramifiés possédant 1 à 6 atomes de carbone,
b) la solution de polymères est coulée en un film,
c) à partir du film, dans une autre étape, la couche de séparation sélective est fabriquée, de préférence par séchage.

2. Procédé selon la revendication 1, **caractérisé en ce que** la fabrication de la solution de polymères est réalisée dans un solvant.

3. Procédé selon l'une quelconque des revendications 1 ou 2, **caractérisé en ce que** la solution de polymères est fabriquée dans un mélange éthanol/ eau.

4. Procédé selon l'une quelconque des revendications 1 à 3, **caractérisé en ce que** la solution de polymères est fabriquée à une température située entre 50°C et 90°C.

5. Procédé selon l'une quelconque des revendications 1 à 4, **caractérisé en ce qu'**est utilisé, en tant que polyéthylène glycol éthérifié, pour la fabrication de la solution de polymères, un polyéthylène glycol - un éther diméthylique et/ou - un diméthyléther et/ou - un éther vinylique et/ou - un éther divinylique et/ou - un éther allyle-méthyle et/ou - un buthyléther et/ou - un éther dibutylique ou des mélanges de ceux-ci.

6. Procédé selon les revendications 1 à 5, **caractérisé en ce que** le film ou la couche de séparation sélective est appliqué sur un support de préférence poreux.

7. Membrane, en particulier membrane de séparation de gaz, qui présente une couche de séparation sélective, de préférence obtenue ou fabriquée par la mise en oeuvre des étapes de procédé conformes au procédé selon l'une des revendications 1 à 6, dans laquelle la couche de séparation sélective est constituée d'au moins un polyéther bloc amide et au moins un polyéthylène glycol éthérifié ou est fabriquée à partir d'eux, la proportion du polyéthylène glycol éthérifié étant située entre 5% et 60% en poids, de préférence jusqu'à 50% en poids, de la membrane, et les polyéthylènes glycol comportent de 2 à 8 unités d'éthylène-glycol et les groupes éther sont constitués de groupes alkyle linéaires ou ramifiés comportant de 1 à 6 atomes de carbone.

8. Membrane selon la revendication 7, **caractérisée en ce qu'**au moins un polyéthylène glycol éthérifié est un polyéthylène glycol - un diméthyléther et/ou un polyéthylène glycol - un diméthyléther et/ou un polyéthylène glycol - un éther vinylique et/ou un polyéthylène glycol - un éther divinylique et/ou un polyéthylène glycol - un éther allyle-méthyle et/ou un polyéthylène glycol - un buthyléther et/ou un polyéthylène glycol - un éther dibutylique, ou des mélanges de ceux-ci.

9. Membrane selon la revendication 7 ou la revendication 8, **caractérisée en ce que** la couche de séparation sélective est ou sera disposée sur un support de préférence poreux.

10. Utilisation de polyéthylène glycol éthérifié pour la fabrication d'une membrane, en particulier d'une membrane de séparation de gaz, selon l'une des revendications 7 à 9.

11. Utilisation d'une membrane selon l'une quelconque des revendications 7 à 9 pour la séparation de gaz de préférence polaires, en particulier du dioxyde de carbone, à partir d'un mélange gazeux.

12. Réacteur de séparation des gaz avec une membrane, en particulier une membrane de séparation de gaz, selon l'une quelconque des revendications 7 à 9.

13. Procédé pour l'exploitation d'un réacteur de séparation des gaz selon la revendication 12, dans lequel, entre un premier côté et un deuxième côté de la membrane selon l'une des revendications 7 à 9, est exercée une différence de pression de gaz.
